# EUROPEAN PATENT APPLICATION

(11) **EP 2 474 814 A1**
(43) Date of publication of application: **11.07.2012**
(21) Application number: 12150738.8
(22) Date of filing: 11.01.2012
(51) Int. Cl.: G01D 4/00, H02J 3/14, H02J 13/00

(54) **Methods and apparatus for controlling loads coupled to an electrical grid**

(30) Priority: 11.01.2011 US 201113004573
(71) Applicant: General Electric Company, Schenectady, New York 12345 (US)
(72) Inventor: Vadali, Kanaka Venkata Surya Manoj Kumar, 500081 Andhra Pradesh (IN); Pamulaparthy, Balakrishna, 500081 Andhra Pradesh (IN)
(74) Representative: Cleary, Fidelma

(57) **Abstract**

An energy meter (46) configured to couple to an electrical grid (14) for monitoring energy consumption of an electrical load (40) connected to the energy meter is described. The energy meter includes a processor (60) and at least one input device (62, 64) coupled to the processor. The at least one input device is configured to receive energy usage data from the electrical load (40) and pricing data from a utility company (12). The energy meter also includes a communication device (66) coupled to the processor and configured to wirelessly communicate with a portable electronic device (70) associated with a customer of the utility company.

## Description

### BACKGROUND OF THE INVENTION

The field of the disclosure relates generally to the transmission and distribution of electricity over an electrical grid, and more specifically, to methods and apparatus for use in controlling loads coupled to the electrical grid via an energy meter.

In the future, demand for electricity by customers may exceed available supply from power utility companies. For example, certain events may cause energy demand to peak at a level that is above a utility's ability to provide electricity to every customer. Accordingly, "blackouts" or "brownouts" may be imposed upon customers. Power utilities generally do not have the ability to selectively determine which loads within a customer's premises will be disabled due to a blackout or brownout. Rather, during such operating conditions, a customer's entire premises is typically subjected to a reduction or complete loss of power when a brownout or blackout occurs. Furthermore, stability of the electrical grid is reduced and the sudden removal of power may damage electrical loads coupled to the electrical grid.

To prevent electricity demand from exceeding power distribution capabilities during peak energy usage periods of time, power utility companies may employ active and/or passive load control techniques to influence electricity demand. For example, to implement active control of the loads consuming electricity, some power utilities utilize what is referred to herein as a "smart grid" or Advanced Metering Infrastructure (AMI) power network. Using an AMI network, a power utility may communicate with individual loads within a customer's premises and selectively reduce power consumption during peak usage periods. As such, during peak energy usage periods of time, a power utility may reduce power to low priority loads, while maintaining power to high priority loads.

Implementing a passive load control technique may require an electric utility to charge varying rates based on demand. A variable rate program should provide an incentive for customers to adjust their energy usage to help stabilize energy demand, specifically, by reducing energy demand during peak energy usage periods of time. For example, during periods of peak demand, a higher rate for electricity may be charged. Conversely, during low-demand periods, a lower rate may be charged. However, the inability of some types of users to curtail energy use and a lack of real-time information regarding the immediate cost of energy usage may limit the success of a variable rate program.

### BRIEF DESCRIPTION OF THE INVENTION

In one aspect, the invention resides in an energy meter configured to couple to an electrical grid for monitoring energy consumption of an electrical load connected to the energy meter is provided. The energy meter includes a processor and at least one input device coupled to the processor. The at least one input device is configured to receive energy usage data from at least one of the electrical loads and pricing data from a utility company. The energy meter also includes a communication device coupled to the processor and configured to wirelessly communicate with a portable electronic device associated with a customer of the utility company.

In another aspect, the invention resides in a home automation system including a first load that includes a first communication device, a second load that includes a second communication device and an energy meter as described above.

In yet another aspect, the invention resides in a method for controlling an electrical load coupled to an electrical grid. The method includes receiving pricing data from a utility company and receiving energy usage data from at least one electrical load coupled to the electrical grid. The method also includes determining a recommended action based on pricing data received from the utility company and energy usage data received from the at least one electrical load. The method also includes generating a recommended action signal based on the recommended action. The method also includes providing the recommended action to a portable electronic device associated with a customer of the utility company.

### BRIEF DESCRIPTION OF THE DRAWINGS

Embodiments of the present invention will now be described, by way of example only, with reference to the accompanying drawings in which:
Figure 1 is a block diagram of an exemplary energy production and delivery system.
Figure 2 is a block diagram of an exemplary energy user of the energy production and delivery system shown in Figure 1.
Figure 3 is a flow chart of an exemplary method for use in controlling loads coupled to an electrical grid, for example, loads included within the energy production and delivery system shown in Figure 1.

### DETAILED DESCRIPTION OF THE INVENTION

The methods and apparatus described herein facilitate providing energy usage information and energy pricing information to a portable electronic device of a customer. The methods and apparatus described herein may also include receiving a load shedding signal from the portable electronic device of the customer and shedding a corresponding load.

Technical effects of the methods and apparatus described herein include at least one of: (a) receiving pricing data from a utility; (b) receiving energy usage data from at least one electrical load; (c) determining recommended actions based on the pricing data and the energy usage data; and (d) providing the recommended actions to a consumer cellular device.

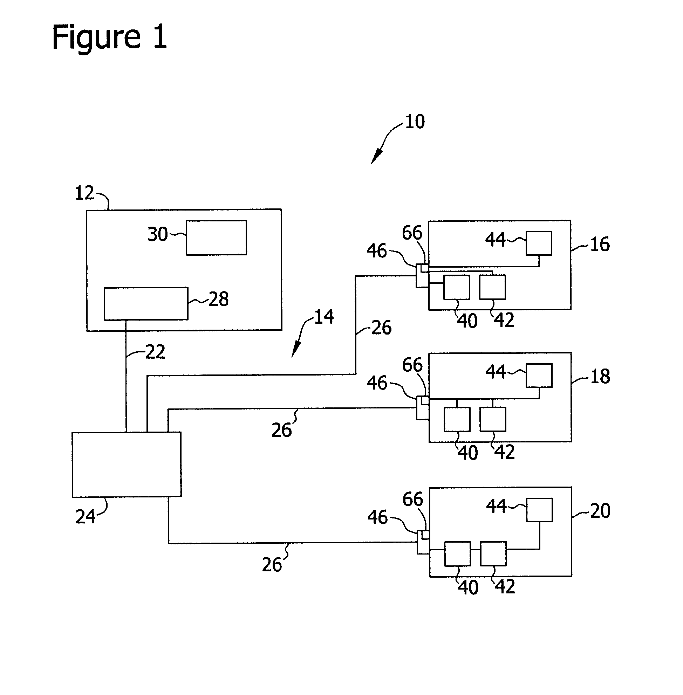

Figure 1 is a block diagram of an exemplary energy production and delivery system 10 that includes an electric utility 12, an electrical grid 14, and a plurality of customer or energy user locations, for example, a first customer location 16, a second customer location 18, and a third customer location 20. In the exemplary embodiment, electricity is delivered from electric utility 12 to customer locations 16, 18, and 20 via electrical grid 14. In the exemplary embodiment, electrical grid 14 includes at least one transmission line 22, an electrical substation 24, and a plurality of distribution lines 26. Moreover, in the exemplary embodiment, electric utility 12 includes an electric power generation system 28 that supplies electrical power to electrical grid 14. Electric power generation system 28 may include a generator driven by, for example, a gas turbine engine, a hydroelectric turbine, and/or a wind turbine. Alternatively, electric power generation system 28 may utilize solar panels and/or any other electricity generating device that allows system 10 to function as described herein.

In the exemplary embodiment, electric utility 12 also includes a computer system 30 that controls energy production and delivery. Computer system 30 is illustrated as being included within electric utility 12, however, computer system 30 may be external to electric utility 12 (e.g., remotely located) and in communication with electric utility 12. Furthermore, although described as a computer system, computer system 30 may be any suitable processing device that enables energy production and delivery system 10 to function as described herein. The term processing device, as used herein, refers to central processing units, microprocessors, microcontrollers, reduced instruction set circuits (RISC), application specific integrated circuits (ASIC), logic circuits, and any other circuit or processor capable of executing the functions described herein.

In the exemplary embodiment, customer locations 16, 18, and 20 include electric loads, for example, a respective first load 40, second load 42, and third load 44. Moreover, in the exemplary embodiment, each customer location 16, 18, and 20 includes an end user meter 46. In the exemplary embodiment, end user meter 46 are part of an advanced metering infrastructure (AMI). AMI is an example of a bidirectional communication system that enables electric utility 12 to measure and collect information relevant to energy usage from customer locations 16, 18, and 20, as well as to provide data and control signals to end user meter 46. For example, in response to a command input from a customer's portable electronic device, AMI allows the customer to prevent a load, for example, load 40, from consuming electricity from electrical grid 14, an operational concept also referred to herein as "shedding" load 40 from electrical grid 14. To shed a load, for example, load 40, a hard disconnect may be used, wherein electricity is prevented from reaching load 40. For example, a load control relay (not shown in Figure 1) may be opened after receiving a shedding signal from meter 46. When open, electricity is prevented from reaching any electrical loads coupled to the load control relay. In an alternative embodiment, at least one load 40, 42, and/or 44 may be a "smart device." As defined herein, smart devices include a communication device that facilitates receiving a shedding signal from the customer and that turns off the device in response to receiving the shedding signal. Such an action is referred to herein as a soft disconnect. A soft disconnect enables the smart device to execute a shut-down procedure and/or to save data prior to shutting-off the device. A soft disconnect also enables individual control of devices, rather than requiring the removal of power from all loads coupled to meter 46.

Loads 40, 42, and 44 may be communicatively coupled in any manner that facilitates operation of the AMI as described herein. Such connections may be referred to as a home area network (HAN). Three exemplary types of networks are illustrated within customer locations 16, 18, and 20. Moreover, loads 40, 42, and 44 may include wireless communication devices that enable communication between meter 46 and loads 40, 42, and 44. Examples of wireless standards that may be used by such wireless communication devices include, but are not limited to, IEEE 802.11 standards including 802.11a, 802.11b, 802.11d, 802.11e, 802.11g, 802.11h, 802.11i. 802.11j, and 802.11n, Wi-Fi®, ZigBee®, and Z-Wave®. Wi-Fi® is a certification mark developed by the Wi-Fi Alliance, ZigBee® is a registered trademark of ZigBee Alliance, Inc. of San Ramon, CA, and Z-Wave® is an identity mark of the Z-Wave Alliance of Milpitas, CA. Such communication enables meter 46 to function as a part of a home automation system, and thus, facilitates centralized control of electrical devices at a customer location, for example, customer location 16.

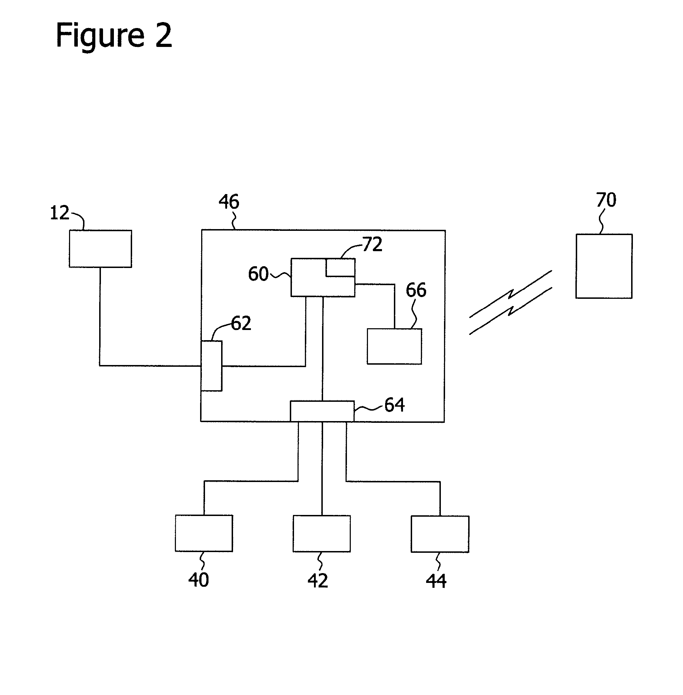

Figure 2 is an exemplary block diagram of a customer location 16 (shown in Figure 1). In the exemplary embodiment, end user meter 46 includes a processing device 60, a first input/output (I/O) device 62, a second I/O device 64, and a communication device 66. First I/O device 62 is coupled to processing device 60 and configured to receive information from utility 12. In one example, information received from utility 12 includes pricing data. To facilitate controlling demand, utility 12 may implement a variable rate pricing program, also referred to as dynamic pricing. The variable rate pricing program enables utility 12 to charge a customer a higher rate during times of high power demand as an incentive for the customer to reduce their energy usage at such times. Such a program may be voluntary, and require the customer to enroll in the program. Typically, in exchange, the customer receives a discounted energy rate during periods of non-peak energy demand in exchange for accepting the higher rate during periods of peak energy demand.

In the exemplary embodiment, second I/O device 64 is coupled to processing device 60 and is configured to receive data from loads coupled to meter 46, for example, loads 40, 42, and/or 44. In an alternative embodiment, second I/O device 64 also transmits command signals from processing device 60 to loads 40, 42, and/or 44. Although described herein as separate I/O devices, first I/O device 62 and second I/O device 64 may be included within one I/O device.

In the exemplary embodiment, communication device 66 enables communication with a portable electronic device 70 of the customer. More specifically, communication device 66 facilitates wireless communication between meter 46 and portable electronic device 70. Wireless communication may include, but is not limited to, cellular communication, satellite communication, radio frequency (RF) communication, communication utilizing an Institute of Electrical and Electronics Engineers (IEEE) 802.11 standard (e.g., 802.11(g) or 802.11(n)), communication utilizing a Worldwide Interoperability for Microwave Access (WIMAX) standard, and/or any wireless communication that allows meter 46 to function as described herein. Accordingly, portable electronic device 70 may include, but is not limited to only include, a cellular phone, a smart phone, a personal digital assistant, and/or a portable computer. In the exemplary embodiment, processing device 60 determines an energy usage suggestion based at least partially on pricing data received from utility 12. The energy usage suggestion may also be based on a hierarchy of loads 40, 42, and 44. The hierarchy may correspond to a predefined priority level associated with each load 40, 42, and/or 44, wherein processing device 60 will not suggest a higher priority load be shed before a lower priority load.

For example, in the exemplary embodiment, meter 46 receives energy usage information from loads 40, 42, and 44. During time periods of high energy demand, the cost of electricity is increased for customers enrolled in the variable rate pricing program. The energy usage suggestion may include, but is not limited to including, notifying the customer that their heating/cooling system is on and that their energy rate is increasing. The energy usage suggestion may also include a recommendation that the customer turn-off the heating/cooling system, and/or reduce the energy consumption of the heating/cooling system, until a period of lower energy demand exists. Communication device 66 enables the energy usage suggestion to be transmitted to portable electronic device 70. Meter 46 provides the energy usage suggestion via a voice message and/or text message. In the exemplary embodiment, processing device 60 includes a memory device 72 that stores at least one phone number associated with portable electronic device 70. For example, utility 12 stores the at least one phone number in memory device 72 during set-up or installation of electric service at customer location 16. Utility 12 also has the ability to change the stored phone number when a party responsible for customer location 16 changes. Although described herein with respect to a heating/cooling system, meter 46 may receive energy usage data from any load including, but not limited to, a dishwasher, a refrigerator, a washing machine, a dryer, a stove/oven, or a programmable thermostat.

In the exemplary embodiment, after being provided with the energy usage suggestion, system 10 relies on the customer to disconnect a load or to reduce energy consumption. In an alternative embodiment, communication device 66 receives a disconnect signal from portable electronic device 70. For example, the customer may transmit a disconnect signal from portable electronic device 70 to processing device 60, through communication device 66. If loads 40, 42, and/or 44 are smart devices, processing device 60 transmits a disconnect signal to loads 40, 42, and/or 44, initiating a soft disconnect of loads 40, 42, and/or 44, or switching loads 40, 42, and/or 44 to a mode that consumes less power. For example, the disconnect signal may be sent to a dishwasher to instruct the dishwasher to delay a wash, to modify a cycle time, to manage water usage, and/or to operate in an energy saver mode. In another example, the disconnect signal may be transmitted to a refrigerator to instruct the refrigerator to delay a defrost operation, to reduce a compressor load, to operate with reduced features, and/or to operate in an energy saver mode.

If the customer transmits a disconnect signal for a load that is connected to a load disconnect relay output (not shown in Figure 2) and is not a smart device, processing device 60 will transmit a hard disconnect signal to the load control relay (not shown in Figure 2), to cause power to the selected load(s) to be discontinued. Furthermore, the customer may transmit a total disconnect signal from portable electronic device 70. After receipt of the total disconnect signal, processing device 60 activates a main disconnect relay (not shown in Figure 2) at customer location 16. When open, the main disconnect relay prevents electricity from reaching all loads at customer location 16.

Moreover, the customer may also transmit a load shedding schedule from portable electronic device 70 to meter 46. For example, processing device 60 may determine an energy usage suggestion when it is recommended the customer shed a load every day if the load is consuming electricity during a peak energy usage period of time. The customer may transmit a scheduling signal to accept this energy usage suggestion. The customer may also edit previously stored scheduling options using portable electronic device 70.

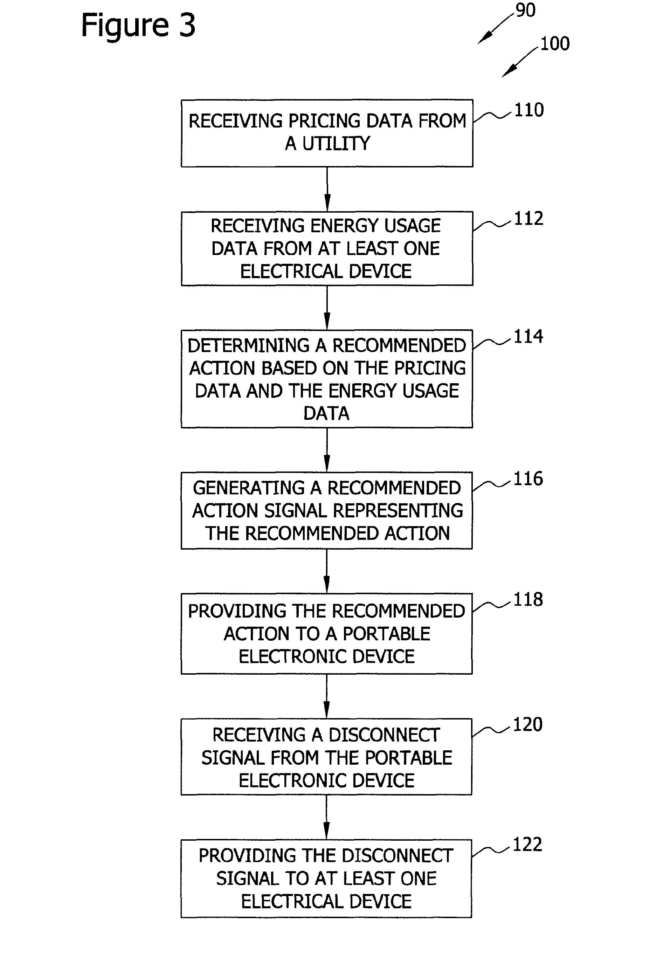

Figure 3 is a flow chart 90 of an exemplary method 100 for use in controlling loads coupled to an electrical grid, for example, loads 40, 42, and/or 44 coupled to electrical grid 14 (shown in Figure 1). In the exemplary embodiment, pricing data is received 100 from a utility, for example, utility 12 (shown in Figure 1). Such pricing data includes data representing current electricity rates, which vary throughout the day for customers enrolled in variable energy rate pricing programs. Energy usage data is received 112 from at least one electrical device, for example, from loads 40, 42, and/or 44. In the exemplary embodiment, the energy usage data includes data representing current power consumption of loads 40, 42, and/or 44.

In the exemplary embodiment, a recommended action, also referred to herein as an energy usage suggestion, is determined 114 based on the pricing data and the energy usage data. Method 100 also includes generating 116 a recommended action signal representing the recommended action. The recommended action may include notifying the customer that their heating/cooling system is on and that their energy rate is increasing. The recommended action may also include a recommendation that the customer turn-off the heating/cooling system, or reduce the energy consumption of the heating/cooling system, until a period of lower energy demand. The recommended action may include a determination 114 that stored priority level data be accessed such that loads 40, 42, and 44 are rank-ordered based on predefined priority levels. For example, a memory device, for example, memory device 72 (shown in Figure 2), may store a first priority level assigned to load 40, a second priority level assigned to load 42, and a third priority level assigned to load 44. In the exemplary embodiment, load 44 may be determined to be a higher priority load than loads 40 and 42, and therefore, the recommended action will be that loads 40 and 42 be shed/reduced before recommending load 44 be shed/reduced.

Method 100 also includes providing 118 the recommended action signal to a portable electronic device, for example, portable electronic device 70 (shown in Figure 2). For example, processing device 60 may generate 116 a voice message and/or a text message that includes the recommended action, and subsequently provide 118 the voice message and/or text message to a phone number stored in processing device 60 and associated with portable electronic device 70.

A disconnect signal may be received 120 from portable electronic device 70. The disconnect signal includes a load selected by the customer using portable electronic device 70, for example, load 40, and instructions for processing device 60 to disconnect load 40. Method 100 may also include providing 122 the disconnect signal to load 40. For example, if load 40 is a smart device, processing device 60 may transmit the disconnect signal (i.e., a soft disconnect signal) to load 40 instructing it to turn-off or to operate in a mode that consumes less power. Alternatively, if load 40 is not a smart device, but is connected to the output of the load disconnect relay, processing device 60 may transmit 122 the disconnect signal (i.e., a hard disconnect signal) to a load control relay, which discontinues power to load 40. The customer can also provide commands to control loads independent of the recommended action. For example, the customer can turn on or turn off any loads connected to meter 46.

The methods and apparatus described herein facilitate providing energy usage information and energy pricing information to a portable electronic device of a customer. The methods and apparatus described herein may also include receiving a load shedding signal from the portable electronic device of the customer and shedding a corresponding load. The methods and apparatus described herein provide the customer with the ability to control a main disconnect relay and/or a load disconnect relay. These relays are typically only controlled by the utility. By transmitting data to, and receiving data from, a customer's portable electronic device, the customer gains flexibility in controlling their household electronic devices remotely.

Described herein are exemplary methods, systems, and apparatus for providing energy usage information to a portable electronic device of a customer. More specifically, the methods, systems, and apparatus described herein provide energy usage suggestions to a customer, via a cellular device, based at least partially on current energy rate data and current energy usage data.

The methods, systems, and apparatus described herein facilitate efficient and economical implementation of a variable rate pricing program and demand side management of a smart grid. Exemplary embodiments of methods, systems, and apparatus are described and/or illustrated herein in detail. The methods, systems, and apparatus are not limited to the specific embodiments described herein, but rather, components of each system, as well as steps of each method, may be utilized independently and separately from other components and steps described herein. Each component, and each method step, can also be used in combination with other components and/or method steps.

When introducing elements/components/etc. of the methods, systems, and apparatus described and/or illustrated herein, the articles "a", "an", "the", and "said" are intended to mean that there are one or more of the element(s)/component(s)/etc. The terms "comprising", "including", and "having" are intended to be inclusive and mean that there may be additional element(s)/component(s)/etc. other than the listed element(s)/component(s)/etc.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An energy meter (46) configured to couple to an electrical grid (14) for monitoring energy consumption of an electrical load (40) connected to the energy meter, said energy meter comprising:
a processor (60);
at least one input device (62, 64) coupled to said processor and configured to receive energy usage data from the electrical load and pricing data from a utility company (12); and
a communication device (66) coupled to said processor and configured to wirelessly communicate with a portable electronic device (70) associated with a customer of the utility company.

2. An energy meter (46) in accordance with Claim 1, wherein said processor (60) comprises a memory device (72) configured to store a priority level associated with the electrical load (40).

3. An energy meter (46) in accordance with Claim 2, wherein said processor (60) is configured to determine an energy usage suggestion based at least partially on pricing data received from the utility company (12) and based at least partially on the priority level of the electrical load (40), said processor further configured to generate an energy usage suggestion signal in response to the energy usage suggestion.

4. An energy meter (46) in accordance with any of Claims 1 to 3, wherein said communication device (66) comprises a cellular communication device configured to transmit data to, and receive data from, said portable electronic device (70).

5. An energy meter (46) in accordance with Claim 2, wherein said memory device (72) is configured to store contact information associated with said portable electronic device (70).

6. An energy meter (46) in accordance with any of Claims 1 to 5, wherein said communication device (66) is further configured to communicate with the utility company (12).

7. An energy meter (46) in accordance with any preceding Claim, wherein said communication device (66) is configured to receive a disconnect signal from said portable electronic device (70).

8. An energy meter (46) in accordance with Claim 7, wherein said at least one input device (62, 64) is further configured to output a disconnect signal to the electrical load (40) in response to the disconnect signal received from said portable electronic device (70).

9. An energy meter (46) in accordance with any preceding Claim, wherein said at least one input device (62, 64) comprises a wireless transceiver configured to receive at least energy usage data from the electrical load (40), and pricing data from the utility company (12).

10. A home automation system comprising:
a first load comprising a first communication device;
a second load comprising a second communication device; and
an energy meter as recited in any of claims 1 to 9.

11. A method for controlling an electrical load (40) coupled to an electrical grid, said method comprising:
receiving pricing data from a utility company (12);
receiving energy usage data from at least one electrical load (40) coupled to the electrical grid (14);
determining a recommended action based on pricing data received from the utility company (12) and energy usage data received from the at least one electrical load (40);
generating a recommended action signal based on the recommended action; and
providing the recommended action signal to a portable electronic device (70) associated with a customer of the utility company (12).

12. A method in accordance with Claim 11, further comprising receiving a disconnect signal from the portable electronic device (70).

13. A method in accordance with Claim 12, further comprising providing the disconnect signal to the at least one electrical load (40).

14. A method in accordance with Claim 13, wherein providing the disconnect signal comprises at least one of providing a hard disconnect signal to a load control relay, providing a soft disconnect signal to the at least one electrical load, and providing a total disconnect signal to the energy meter.

15. A method in accordance with any of Claims 11 to 14, wherein determining recommended actions comprises accessing stored priority level data that rank orders the at least one electrical load (40) based on a predefmed priority level.
